# DEMANDE DE BREVET EUROPEEN

(11) **EP 0 637 562 A1**
(43) Date de publication de la demande: **08.02.1995**
(21) Numéro de dépôt: 94401509.8
(22) Date de dépôt: 01.07.1994
(51) Int. Cl.: B65H 45/12, B31F 1/00

(54) **Procédé et dispositif de pliage de feuilles thermoplastiques**

(30) Priorité: 12.07.1993 FR 9308555
(71) Demandeur: ELF ATOCHEM S.A., F-92800 Puteaux (FR)
(72) Inventeur: El Bounia, Nour Eddine, F-64300 Orthez (FR); Grijalba Laquet, Laura, F-64000 Pau (FR); Boutoleau, Michel, F-65320 Borderes-sur-Echez (FR); Boubault, Bernard, F-83130 La Garde (FR)

(57) **Abrégé**

La présente invention concerne un procédé et un dispositif de pliage de feuilles thermoplastiques. Ce dispositif trouve en particulier son utilité dans l'évaluation de l'aptitude au pliage de feuilles thermoplastiques et plus spécialement de celle du polystyrène choc. Ce dispositif comporte trois appuis sensiblement parallèles entre eux (2,3,4) qui peuvent solliciter une feuille thermoplastique (1) placée sensiblement perpendiculairement à eux. La feuille est pliée grâce au mouvement des appuis au cours duquel l'un des appuis (2) passe entre les deux autres (3,4). En fin de pliage, la feuille thermoplastique apparait pliée en quatre.

## Description

La présente invention concerne un dispositif de pliage de feuilles thermoplastiques. Ce dispositif trouve en particulier son utilité dans l'évaluation de l'aptitude au pliage de feuilles thermoplastiques et plus spécialement de celle du polystyrène choc.

Cette évaluation peut être réalisée manuellement par des panels de personnes. Ces personnes plient avec leurs deux mains des éprouvettes du matériau à tester et la qualité de la pliure est évaluée et notée par appréciation visuelle.

Ce pliage manuel est effectué sur des éprouvettes rectangulaires de la feuille à tester. L'éprouvette est tout d'abord pliée sensiblement sur une des ses médianes, puis, le premier pli restant formé, une deuxième pliure est exercée sensiblement sur l'autre médiane de l'éprouvette.

Cette seconde pliure est donc sensiblement perpendiculaire à la première, et, en fin de pliage, I'éprouvette apparaît pliée en quatre.

La zone près de l'intersection des deux pliures est celle qui présente généralement la plus forte dégradation, et l'on peut y observer, suivant la feuille, un changement de coloration ou d'opacité ou une fissure de plus ou moins grande dimension. La feuille sera jugée d'autant mieux apte au pliage que cette dégradation sera faible.

Cette méthode d'évaluation conduit à des résultats difficilement reproductibles car ce pliage manuel fait intervenir des facteurs humains incontrôlables.

La mise au point d'une méthode fiable de l'évaluation de l'aptitude au pliage paraît indispensable dans l'industrie des thermoplastiques, en particulier celle du polystyrène choc.

On a maintenant trouvé un dispositif qui permet de plier de façon reproductible une feuille thermoplastique, les pliures réalisées pouvant ensuite être exploitées pour évaluer l'aptitude au pliage desdites feuilles.

Ce dispositif plie la feuille de façon analogue à celle précédemment décrite, c'est à dire qu'il lui occasionne deux pliures la traversant entièrement, les deux pliures étant sensiblement perpendiculaires l'une par rapport à l'autre.

Les deux pliures peuvent être réalisées quasi-simultanément, c'est à dire qu'il n'est pas indispensable que la première pliure soit terminée pour que la deuxième soit entamée. Par contre, de préférence, le dispositif occasionne la seconde pliure sensiblement après que la première ait été occasionnée.

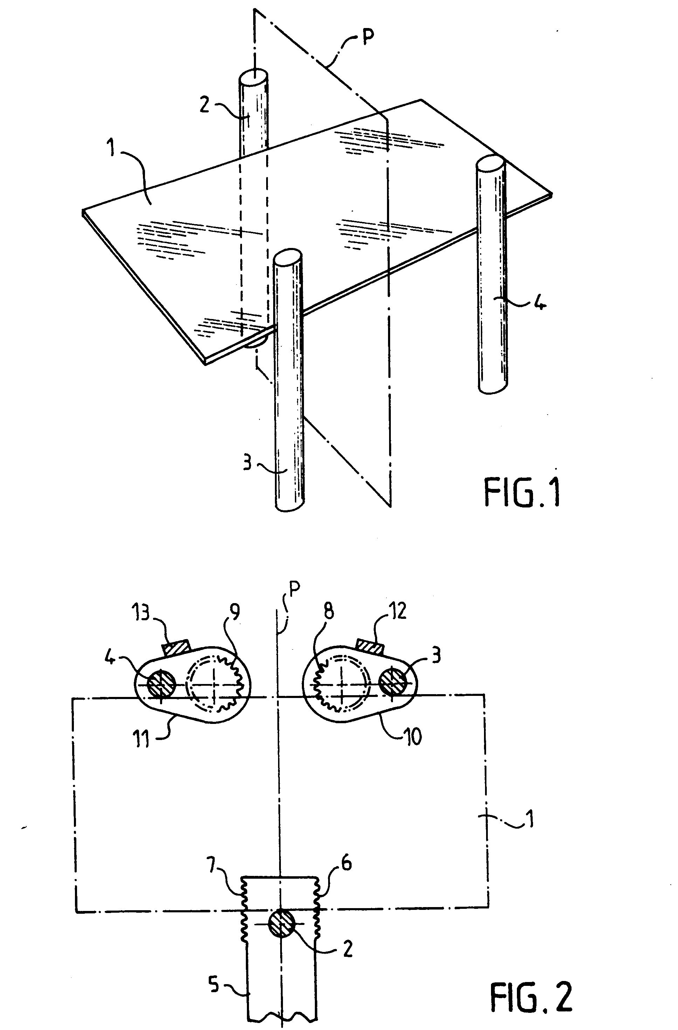

La Figure 1 représente le dispositif avant pliage d'une feuille selon un mode de réalisation de l'invention. Ce dispositif comporte au moins trois appuis sensiblement parallèles entre eux, lesdits appuis pouvant solliciter une feuille thermoplastique (1) placée, avant pliage, sensiblement perpendiculairement auxdits appuis. Au moins un appui (2) sollicite la feuille du côté opposé à celui sollicité par au moins deux appuis (3) et (4).

Ces derniers présentent, tout au long du pliage, une position symétrique par rapport à un plan (P) contenant l'axe de l'appui (2). Au cours du pliage, l'appui (2) passe entre les appuis (3) et (4). Ainsi, en début de pliage, une première pliure est occasionnée sensiblement perpendiculairement au plan (P), puis, dans le mouvement de passage de l'appui (2) entre les appuis (3) et (4), la seconde pliure est formée sensiblement dans le plan (P) et parallèlement aux appuis.

Les appuis (2), (3) et (4), peuvent avoir différents mouvements. On peut par exemple fixer la position des appuis (3) et (4) et réaliser la totalité du pliage par une translation de l'appui (2) dans le plan (P) en faisant passer l'appui (2) entre les appuis (3) et (4).

Selon une autre variante, c'est l'appui (2) qui est fixe et les appuis (3) et (4) qui se déplacent pour faire passer l'appui (2) entre eux.

Selon un mode préféré de réalisation de l'invention, les appuis (3) et (4) se rapprochent du plan (P) au cours du pliage, toujours de façon symétrique par rapport au plan (P).

Dans ce cas, tant que l'appui (2) n'est pas passé entre les appuis (3) et (4), I'écart entre ces derniers reste suffisant pour laisser passer entre eux, au cours du pliage, l'appui (2) et la feuille thermoplastique que ce dernier entraîne.

L'écart entre les appuis (3) et (4) peut continuer de diminuer après le passage de l'appui (2) entre les appuis (3) et (4) jusqu'à environ quatre fois l'épaisseur de la feuille thermoplastique.

De préférence, le rapprochement entre les appuis (3) et (4) n'intervient qu'après un premier rapprochement entre l'appui (2) et le plan passant par les appuis (3) et (4).

Selon un mode encore préféré de l'invention, le rapprochement entre les appuis (3) et (4) est réalisé en faisant parcourir auxdits appuis des arcs de cercle, toujours de façon symétrique par rapport au plan (P).

Les centres de ces cercles sont donc également placés symétriquement par rapport au plan (P).

On peut placer chaque centre de cercle du côté opposé par rapport au plan (P), à celui ou se trouve l'appui qui décrit un arc dudit cercle.

Cependant, on placera de préférence chaque centre de cercle du même côté du plan (P) que l'appui qui décrit un art dudit cercle.

Le mouvement des appuis, si plus d'un appui entre en mouvement, doit être synchronisé.

Cette synchronisation peut être assurée par un dispositif électromécanique. Elle peut également être assurée par un dispositif exclusivement mécanique, comme par exemple un montage de crémaillères et de roues dentées.

Dans le cadre de cette variante, en particulier illustrée par la figure 2, et pour le cas ou chaque centre de cercle est situé du même côté du plan (P) que l'appui décrivant un arc dudit cercle, l'appui (2) est fixé sur une pièce (5), laquelle comporte deux crémaillères (6) et (7) parallèles, identiques, situées en permanence symétriquement par rapport au plan (P), lesdites crémaillères pouvant commander des roues dentées (8) et (9), identiques, aux centres fixes, situées en permanence symétriquement par rapport au plan (P), les axes de rotation de ces roues dentées coïncidant avec les centres des cercles dont les appuis (3) et (4) décrivent des arcs.

Selon la variante préférée, illustrée par la figure (2), l'appui (3) et la roue dentée (8) sont fixés sur une pièce (10) pour former un premier ensemble (3)-(8)-(10) d'une part, l'appui (4) et la roue dentée (9) sont fixés sur une pièce (11) pour former un second ensemble (4)-(9)-(11) d'autre part, chaque ensemble pouvant tourner autour de l'axe de rotation, fixe, de sa roue dentée.

Pour cette variante, on préférera que les crémaillères n'entrent en synchronisation avec les roues dentées qu'après une première translation de la pièce (5) et donc de l'appui (2) parallèlement au plan (P), de façon à générer la première pliure sans entraîner dès le début du pliage le mouvement des appuis (3) et (4).

Pour ce faire, il est recommandé de :
- dimensionner les pièces et l'éprouvette à tester de façon à ce qu'en début de pliage les crémaillères ne touchent pas encore les roues dentées.
- prévoir des butées (12) et (13), fixes par rapport aux axes de rotation des roues dentées, pour maintenir en position les appuis (3) et (4) en début de pliage.

Pour le cas du dispositif de la figure 2, les butées (12) et (13) peuvent agir sur les pièces (10) et (11), comme cela est représenté sur la figure 2, mais elles pourraient également agir sur les appuis (3) et (4) directement.

A titre d'exemple selon un mode de réalisation particulièrement adapté, en particulier au pliage d'éprouvettes de polystyrène choc de dimension 50 × 100 × 1 mm, on utilise trois appuis de 8 mm de diamètre. Pour réaliser ce dispositif, on peut utiliser des crémaillères de 12 mm de long, distantes l'une de l'autre de 19 mm, ces crémaillères agissant sur des roues dentées de 13 mm de diamètre, les centres de ces roues dentées étant fixes et distants l'un de l'autre de 31 mm. L'axe de chaque roue dentée est ici distant de l'axe de l'appui dont elle est solidaire, de 12 mm. On place alors la feuille thermoplastique de sorte que les appuis sollicitent les cotés de 100 mm de ladite feuille. Avant que les crémaillères ne commandent les roues dentées, et à compter du moment ou tous les appuis sollicitent la feuille, l'appui (2) parcourt une distance de 48 mm. Pendant ce parcours, les axes des appuis (3) et (4), immobiles, sont distants l'un de l'autre de 55 mm. En fin de pliage, les appuis (3) et (4) sont distants l'un de l'autre de 30 mm et le plan passant par les axes des appuis (3) et (4) est distant de l'axe de l'appui (2) de 6 mm.

Si le dispositif de pliage est tel que les appuis sont sensiblement horizontaux, de préférence au moins l'un d'entre eux et de manière encore préférée au moins deux d'entre eux présentera une encoche destinée à maintenir la feuille en position tout au long du pliage.

Cette encoche présentera, perpendiculairement à l'appui, une surface plane (S), contre laquelle la feuille destinée à être pliée sera placée. Cette surface (S) sera prolongée par un support (14) venant en excroissance de l'appui. Cette surface (S) sera suffisamment grande pour orienter le pliage, de sorte que la tranche de la feuille, perpendiculaire à (S) en début de pliage, soit, en fin de pliage, sensiblement parallèle à (S).

La figure 3 représente un appui muni de cette encoche et de ce support (14) ainsi que de la feuille placée pour être pliée.

La figure 4 représente le même ensemble en fin de pliage de la feuille.

Si le dispositif de pliage est tel que les appuis sont sensiblement verticaux, on pourra également munir au moins un appui et de préférence au moins deux appuis d'encoches comme précédemment décrit. On pourra cependant ne pas y avoir recours si le dispositif comprend un plateau (15) fixe, sensiblement horizontal ledit plateau comportant des alvéoles traversées par les appuis et à travers lesquelles les appuis peuvent décrire leur mouvement. Le mécanisme entraînant les appuis est placé sous le plateau.

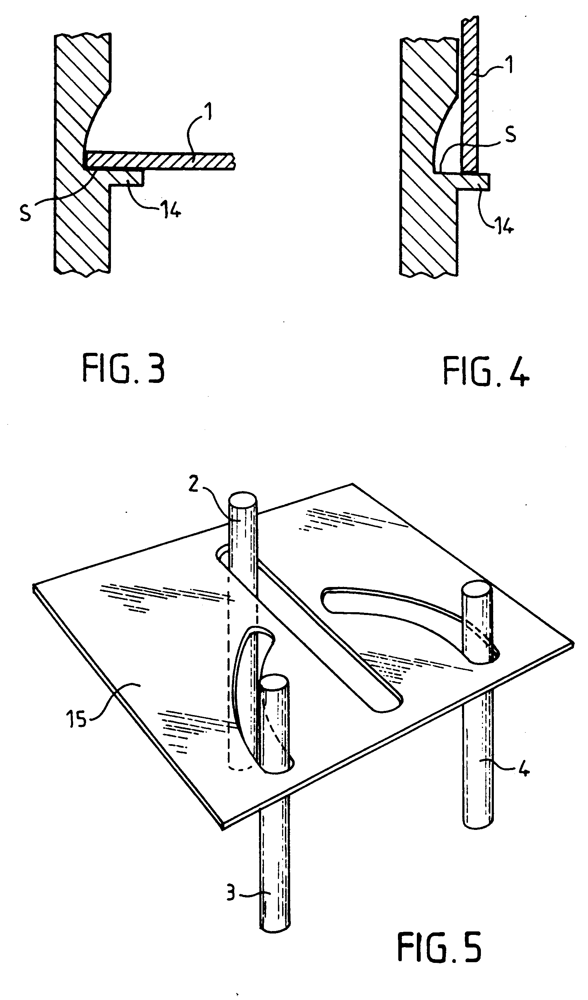

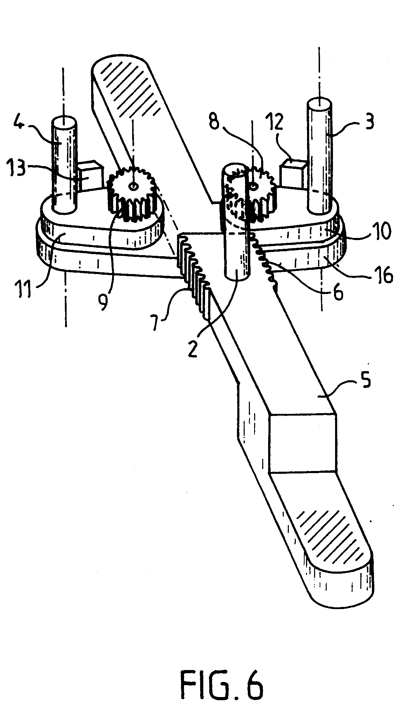

La figure 5 représente un tel ensemble pour le cas où les appuis (2), (3) et (4) sont mobiles et ou les appuis (3) et (4) décrivent des arcs de cercle au cours du pliage.

Le plateau permet de supporter la feuille thermoplastique que l'on souhaite plier.

On peut combiner tous les dispositifs ci-dessus décrits avec une machine de mesure de la résistance à la flexion. Ces machines sont couramment utilisées pour, dans le cadre de l'étude de la résistance de matériaux, connaître les modules et les résistances à la rupture desdits matériaux. Ces machines comportent généralement deux bras dans le même axe, un dispositif électromécanique commandant le déplacement des bras à la vitesse voulue, ainsi qu'un dispositif mesurant, en fonction de la position des bras, la force nécessaire à appliquer aux bras. Ces mesures permettent de déduire la contrainte nécessaire à appliquer à une éprouvette d'un matériau donné en fonction de l'importance de la déformation qui lui est occasionnée par l'intermédiaire des bras de la machine.

Les dispositifs incluant les dispositifs de pliage préalablement décrits et une machine de mesure de la résistance à la flexion permettent, en plus du pliage proprement dit, d'évaluer au moins de façon comparative, la résistance de la feuille thermoplastique à la pliure en fonction de l'avancement de celle-ci.

Pour les dispositifs précédemment décrits comportant au moins trois appuis, un appui (2) sollicitant la feuille à plier du côté opposé à celui sollicité par deux appuis (3) et (4), ces derniers ayant entre eux, tout au long du pliage, une position symétrique par rapport à un plan (P) contenant l'axe de l'appui (2), et de sorte qu'en cours de pliage, l'appui (2) passe entre les appuis (3) et (4), l'appui (2) sera relié à l'un des bras de la machine de flexion, tandis que les appuis (3) et (4) seront reliés à l'autre bras de la machine de flexion.

Dans une variante de ce dispositif, et pour le cas précédemment décrit et illustré par la figure 2, ou les mouvements des appuis sont synchronisés par des crémaillères et des roues dentées, et où l'appui (3) et la roue dentée (8) sont fixés sur une pièce (10) pour former un premier ensemble, et où l'appui (4) et la roue dentée (9) sont fixés sur une pièce (11) pour former un second ensemble, on reliera les deux ensembles par une pièce en forme de T (16), chaque ensemble étant relié à cette pièce en forme de T par l'axe de rotation de sa roue dentée, chaque ensemble pouvant tourner autour de cette axe de rotation, les appuis (3) et (4) étant parallèles auxdits axes de rotation. Les axes des roues dentées sont perpendiculaires aux deux barres du T que forme la pièce en question (16). Par ailleurs, ces axes passent tous deux à travers la barre transversale du T, sensiblement symétriquement, l'un par rapport à l'autre, de part et d'autre de l'autre barre du T. Cette dernière est reliée, par l'intermédiaire d'un mors, à l'un des bras de la machine de flexion, de sorte que le plan (P) passe par l'axe dudit bras. D'autre part, dans un tel dispositif, la pièce (5) comportant les crémaillères, est reliée par l'intermédiaire d'un mors à l'autre bras de la machine de flexion, de sorte que le plan (P) passe par l'axe dudit bras. Pour ce dispositif, les butées (12) et (13) sont fixées sur la pièce en forme de T (16). Un tel dispositif est représenté par la figure (6).

Dans ce qui suit, on décrit la mise en oeuvre d'un dispositif selon l'invention, ledit dispositif comportant trois appuis dont deux d'entre eux décrivent des arcs de cercle au cours du pliage, et un support muni d'alvéoles traversées par les appuis.

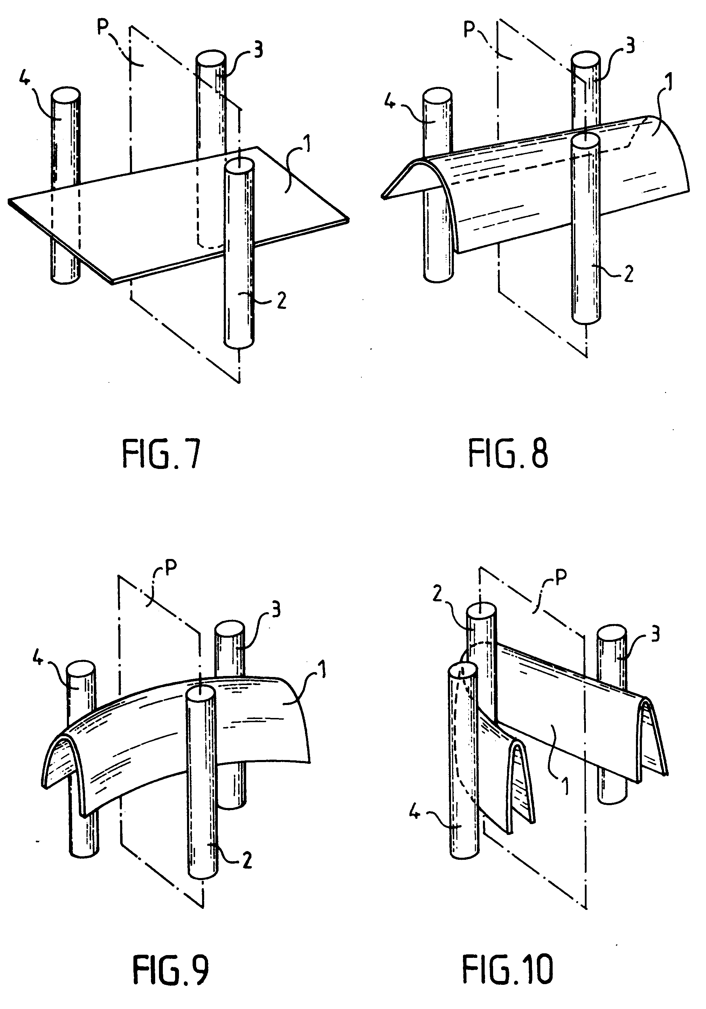

La figure 7 représente le dispositif après que l'on ait placé la feuille thermoplastique sur le support et avant que son pliage n'ait commencé. Dans cette configuration, la feuille est perpendiculaire aux trois appuis, un appui (2) se trouvant d'un côté de la feuille, les deux appuis décrivant au cours du pliage des arcs de cercle (3) et (4), se trouvant tous deux du côté opposé de la feuille à celui ou se trouve l'appui (2).

Pour commencer le pliage, l'appui (2) effectue une première translation en direction de la feuille, les appuis (3) et (4) restant fixes. Ceci occasionne à la feuille une première pliure sensiblement perpendiculairement au plan (P). La figure 8 représente le dispositif et la feuille en début de pliage.

L'appui (2) poursuivant sa translation, la première pliure est accentuée et la seconde pliure est progressivement occasionnée, parallèlement aux appuis. La figure 9 représente le dispositif et la feuille alors que les appui (3) et (4) n'ayant pas encore bougé, la première pliure est quasiment achevée et la seconde pliure est juste engagée. A partir de cette configuration, les appuis (3) et (4) entrent en mouvement pour décrire des arcs de cercle en direction du plan (P) et de sorte que l'appui (2) poursuivant sa translation, passe entre les appuis (3) et (4). La figure 10 représente le dispositif et la feuille en fin de pliage.

On peut libérer la feuille ayant été pliée en faisant revenir le dispositif à son état initial. Dans le cadre de l'étude de l'aptitude au pliage de feuilles thermoplastiques, on peut alors analyser la dégradation infligée à la feuille par le pliage, en particulier au niveau de l'intersection des deux pliures.

## Revendications

1. Dispositif de pliage d'une feuille thermoplastique caractérisé en ce qu'il comporte au moins trois appuis sensiblement parallèles entre eux, lesdits appuits pouvant solliciter une feuille thermoplastique (1) placée, avant pliage, sensiblement perpendiculairement auxdits appuis, un appui (2) sollicitant ladite feuille du côté opposé à celui sollicité par deux appuis (3) et (4), ces derniers ayant entre eux, tout au long du pliage, une position symétrique par rapport à un plan (P) contenant l'axe de la butée (2), et de sorte qu'en cours de pliage, l'appui (2) passe entre les appuis (3) et (4).

2. Dispositif selon la revendication 1 caractérisé en ce que les appuis (3) et (4) se rapprochent du plan (P) au cours du pliage.

3. Dispositif selon la revendication 2 caractérisé en ce que le rapprochement des appuis (3) et (4) n'intervient qu'après un premier rapprochement entre l'appui (2) et le plan passant par les appuis (3) et (4).

4. Dispositif selon la revendication 2 ou 3 caractérisé en ce que les appuis (3) et (4) décrivent des arcs de cercle.

5. Dispositif selon l'une des revendications 1 à 4, caractérisé en ce que le mouvement des appuis est synchronisé par l'intermédiaire d'un dispositif électromécanique.

6. Dispositif selon l'une des revendications 1 à 5, caractérisé en ce que le mouvement des appuis est synchronisé par l'intermédiaire d'au moins une crémaillère et d'au moins une roue dentée.

7. Dispositif selon la revendication 6 caractérisé en ce que l'appui (2) est fixée sur une pièce (5), laquelle comporte deux crémaillères (6) et (7) parallèles situées en permanence symétriquement par rapport au plan (P), lesdites crémaillères pouvant commander des roues dentées (8) et (9) identiques et situées en permanence symétriquement par rapport au plan (P), les axes de rotation de ces roues dentées coïncidant avec les centres des cercles dont les appuis (3) et (4) décrivent des arcs.

8. Dispositif selon la revendication 7, caractérisé en ce que l'appui (3) et la roue dentée (8) d'une part, l'appui (4) et la roue dentée (9) d'autre part, sont fixées respectivement sur des pièces (10) et (11), chaque ensemble, (3)-(8)-(10) d'une part et (4)-(9)-(11) d'autre part, pouvant tourner autour de l'axe de rotation, fixe, de sa roue dentée, les appuis (3) et (4) étant parallèles auxdits axes de rotation.

9. Dispositif selon la revendication 7 ou 8, caractérisé en ce que, lors de la translation de la pièce (5) pour commencer le pliage, ses crémaillères n'entrent en contact avec les roues dentées qu'après une première course pendant laquelle les appuis (3) et (4) sont maintenus grâce à deux butées (12) et (13), fixes par rapport aux axes de rotation des roues dentées.

10. Dispositif selon la revendication 9, caractérisé en ce que les butées (12) et (13) sont en contact avec les pièces (10) et (11) respectivement, en début de pliage.

11. Dispositif selon l'une des revendications 1 à 10 caractérisé en ce qu'au moins un appui et de préférence au moins deux appuis comporte une encoche pour maintenir la feuille thermoplastique en bonne position tout au long du pliage.

12. Dispositif selon l'une des revendications 1 à 11 caractérisé en ce que les appuis sont sensiblement verticaux et en ce qu'il comporte un plateau horizontal fixe destiné à supporter la feuille thermoplastique à plier, ledit plateau comportant des alvéoles à travers lesquelles les appuis qui les traversent peuvent décrire leur mouvement.

13. Dispositif selon l'une des revendications 1 à 12 caractérisé en ce qu'il comprend une machine mesurant la résistance de la feuille à la pliure en fonction de l'avancement de celle-ci.

14. Dispositif selon la revendication 13 caractérisé en ce que l'appui (2) est relié à l'un des bras de la machine et les appuis (3) et (4) sont reliés à l'autre bras de la machine.

15. Procédé consistant à plier une feuille thermoplastique à l'aide de l'un des dispositifs des revendications 1 à 14.

16. Procédé de pliage d'une feuille thermoplastique consistant à occasionner à celle-ci deux pliures la traversant entièrement, les deux pliures étant sensiblement perpendiculaires l'une par rapport à l'autre.

17. Procédé selon la revendication 16 caractérisé en ce que l'une des pliures commence sensiblement après le commencement de l'autre.
